# EUROPÄISCHE PATENTSCHRIFT

(11) **EP 2 722 454 B1**
(45) Veröffentlichungstag und Bekanntmachung des Hinweises auf die Patenterteilung: **15.07.2015**
(21) Anmeldenummer: 13450044.6
(22) Anmeldetag: 26.09.2013
(51) Int. Cl.: E04B 9/32, F21S 8/04, E04B 9/04

(54) **Lichtdecke**
Luminous ceiling
Plafond lumineux

(30) Priorität: 16.10.2012 AT 4022012
(43) Veröffentlichungstag der Anmeldung: 23.04.2014
(60) Teilanmeldung: 14003773.0
(73) Patentinhaber: TREVISION Groß.Bild.Technik GmbH, 7051 Großhöflein (AT)
(72) Erfinder: Wikturna, Heinz, 7051 Großhöflein (AT)
(74) Vertreter: Beer & Partner Patentanwälte KG

(56) Entgegenhaltungen:
- EP-A- 1 783 292
- AT-A1- 509 646
- DE-U1- 20 004 356
- US-A1- 2010 079 983
- US-A1- 2010 182 782

## Beschreibung

Die Erfindung betrifft eine Lichtdecke mit den Merkmalen des einleitenden Teils von Anspruch 1 (US 2010/0079983 A1).

Lichtdecken sind bekannt und umfassen als wesentliche Bestandteile einen Rahmen, in dem eine Frontfolie aus lichtdurchlässigem, beispielsweise durchscheinendem Werkstoff, der bedruckt sein kann, vorgesehen ist.

Auf der der Frontfolie gegenüberliegenden Seite des Rahmens ist eine blickdichte Folie angeordnet, die im Wesentlichen die Funktion einer Staubschutzfolie hat. In bestimmten Anwendungsfällen ist im Rahmen parallel zur blickdichten Folie, die der Frontfolie gegenüberliegt, eine Rückwand, z.B. aus Aluminium, vorgesehen, die dem Rahmen die erforderliche Stabilität gibt und gegebenenfalls auch die Montage des Rahmens in einem Raum erlaubt.

Die Frontfolie wird mit Leuchtmitteln beleuchtet, so dass der lichtabgebende Effekt der Lichtdecke erreicht wird.

Problematisch bei den bekannten Lichtdecken ist es, dass die Frontfolie ungleichmäßig ausgeleuchtet wird und durch Teile des Rahmens Schatten auf die Frontfolie fallen, so dass auch dadurch die Frontfolie ungleichmäßig ausgeleuchtet wird.

Aus der US 2010/0079983 A1 ist eine Beleuchtungsvorrichtung mit einem Rahmen bekannt, der auf einer Seite eine lichtdurchlässige Folie trägt. Auf der der lichtdurchlässigen Folie gegenüberliegenden Seite ist eine lichtreflektierende Fläche vorgesehen.

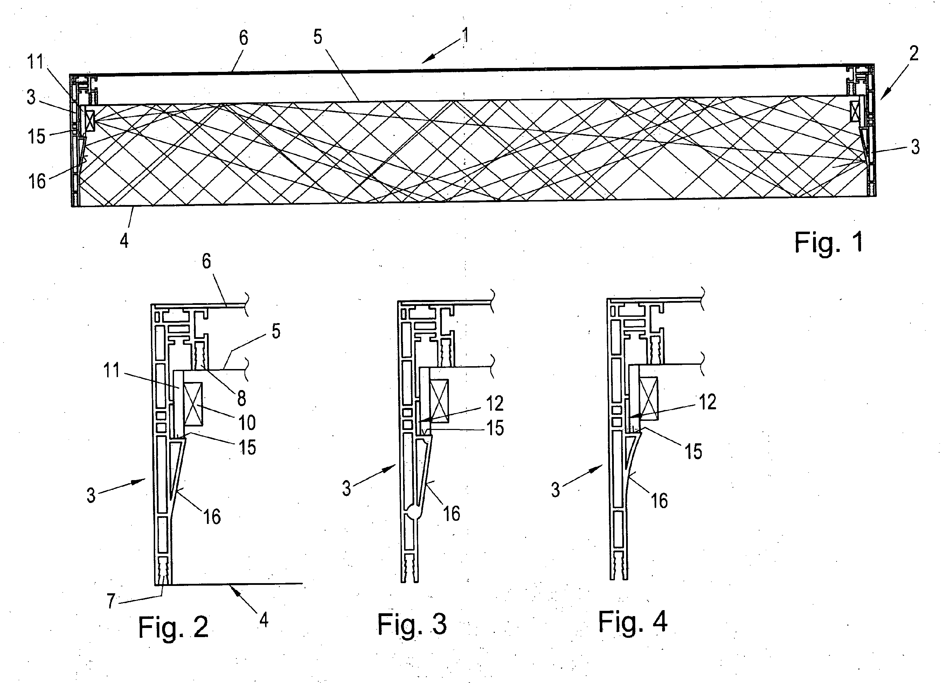

Aus Fig. 2 der US 2010/0079983 A1 ist ersichtlich, dass den Leuchtmitteln vorspringende Teile des Rahmens zugeordnet sind, die als Blenden wirken, da sie, wie auch die in Fig. 2 eingezeichneten Strahlenverläufe zeigen, einen direkten Lichteinfall von den Leuchtmitteln auf die lichtdurchlässige Folie verhindern.

Bei der Beleuchtungsvorrichtung der US 2010/0079983 A1 ist zwischen der durchscheinenden Frontfolie und der Rückwand, welche die reflektierende Fläche bildet, keine blickdichten Folie vorgesehen.

Der Erfindung liegt die Aufgabe zugrunde, eine Lichtdecke der eingangs genannten Gattung zur Verfügung zu stellen, bei der eine möglichst gleichmäßige Ausleuchtung der Frontfolie gewährleistet ist.

Gelöst wird diese Aufgabe erfindungsgemäß mit einer Lichtdecke, welche die Merkmale von Anspruch 1 aufweist.

Bevorzugte und vorteilhafte Ausgestaltungen der erfindungsgemäßen Lichtdecke sind Gegenstand der Unteransprüche.

Da bei der erfindungsgemäßen Lichtedecke neben den Leuchtmitteln, insbesondere auf deren der Frontfolie zugekehrten Seite, eine Blende vorgesehen ist, wird gewährleistet, dass Licht von den Leuchtmitteln wenigstens in der Nähe der Leuchtmittel nicht unmittelbar, sondern erst nach wenigstens einmaliger, vorzugsweise mehrfacher, Reflexion auf die Frontfolie trifft.

Bei der Erfindung ist vorgesehen, dass neben der Blende eine Reflexionsfläche vorgesehen ist, die sich auf die der Lichtquelle gegenüberliegende Seite der Blende erstreckt. Durch diese Reflexionsfläche wird die Reflexion von Licht, das von der wenigstens einer Lichtquelle ausgesendet wird, verbessert und ein noch gleichmäßigerer Lichteinfall auf die Frontfolie erreicht, so dass diese gleichmäßig ausgeleuchtet wird.

Die neben der Blende vorgesehene Reflexionsfläche kann eben oder konvex oder konkav gewölbt sein.

Es ist auch in Betracht gezogen, die Reflexionsfläche verstellbar auszugestalten, damit der Winkel, den sie mit der Frontfolie einschließt und/oder die Form (eben/gewölbt) der Reflexionsfläche verändert werden kann.

So kann durch Verstellen und/oder Verformen der Reflexionsfläche diese in die für den jeweiligen Anwendungsfall günstigste Lage und/oder Form gebracht werden, um ein gleichmäßiges Ausleuchten der Frontfolie zu erreichen.

Im Rahmen der Lichtdecke sind, wie dies für Lichtdecken an sich bekannt ist, Nuten vorgesehen, in welchen die Frontfolie und die der Frontfolie gegenüberliegende, blickdichte Folie durch Klemmen - in gespanntem Zustand - festgelegt werden kann. Hierzu sind an den Rändern der Frontfolie und der blickdichten Folie, die der Frontfolie gegenüberliegend angeordnet ist, beispielsweise Keder, vorgesehen, die klemmend in Nuten im Rahmen eingeschoben werden.

In den Schenkeln des Rahmens ist für die Montage der Träger (Platine) mit Leuchtmitteln eine hinterschnittene Nut vorgesehen, so dass Träger mit Leuchtmitteln durch Einklicken am Rahmen innen festgelegt werden können.

Im Rahmen der Erfindung ist eine Ausführungsform in Betracht gezogen, bei welcher die Blende und die neben ihr vorgesehene Reflexionsfläche von den Schenkeln des Rahmens der Lichtdecke getrennte Bauteile sind. Diese Ausführungsform erlaubt es, die Blenden und die Reflexionsfläche auszutauschen, um die Lichtdecke an geänderte Verhältnisse anzupassen bzw. bestehende Lichtdecken nachzurüsten, indem Bauteile umfassend die Blende und die Reflexionsfläche an bestehende Rahmen von Lichtdecken angebracht werden.

Weitere Einzelheiten und Merkmale der Erfindung ergeben sich aus der nachstehenden Beschreibung von bevorzugten Ausführungsbeispielen anhand der Zeichnungen.

Es zeigt
- Fig. 1: schematisch und im Schnitt eine Lichtdecke,
- Fig. 2: eine Ausführungsform eines Rahmenteils einer erfindungsgemäßen Lichtdecke,
- Fig. 3: eine abgeänderte Ausführungsform eines Rahmenteils,
- Fig. 4: eine weitere Ausführungsform eines Rahmenteils,
- Fig. 5: einen am Rahmen einer Lichtdecke anbringbaren Bauteil mit Blende und Reflexionsfläche,
- Fig. 6: den Bauteil aus Fig. 5 in Schrägansicht und
- Fig. 7: eine Einzelheit des Bauteils aus Fig. 5.

In der Ausführungsform von Figur 1 umfasst eine Lichtdecke 1 einen Rahmen 2, der aus mehreren, in der Regel vier, Rahmenteilen 3 (in Form von Profilleisten mit einer der beispielhaft in den Fig. 2 bis 4 gezeigten Querschnittsformen) zusammengesetzt ist.

In Figur 1 sind nur die zwei seitlichen Rahmenteile 3 des Rahmens 2 gezeigt, um die Übersichtlichkeit von Figur 1 zu gewährleisten.

Zwischen den Rahmenteilen 3 sind eine Frontfolie 4 und eine blickdichte Folie 5 gespannt. Die Frontfolie 4 und die blickdichte Folie 5 werden beispielsweise mit an ihren Rändern vorgesehenen Kedern, die in Nuten 7 bzw. 8 der Rahmenteile 3 (siehe Figur 2) klemmend eingesetzt werden, am Rahmen 2 festgelegt.

Hierzu können die Seitenwände der Nuten 7 und 8 mit Sägezahnprofil ausgestattet sein, um einen sicheren Sitz der Ränder (Keder) der Folien 4 und 5 zu gewährleisten.

An der der Frontfolie 4 gegenüberliegenden Seite des Rahmens 2 ist eine Rückwand 6 vorgesehen. Die Rückwand 6 besteht aus Metall, insbesondere Aluminium.

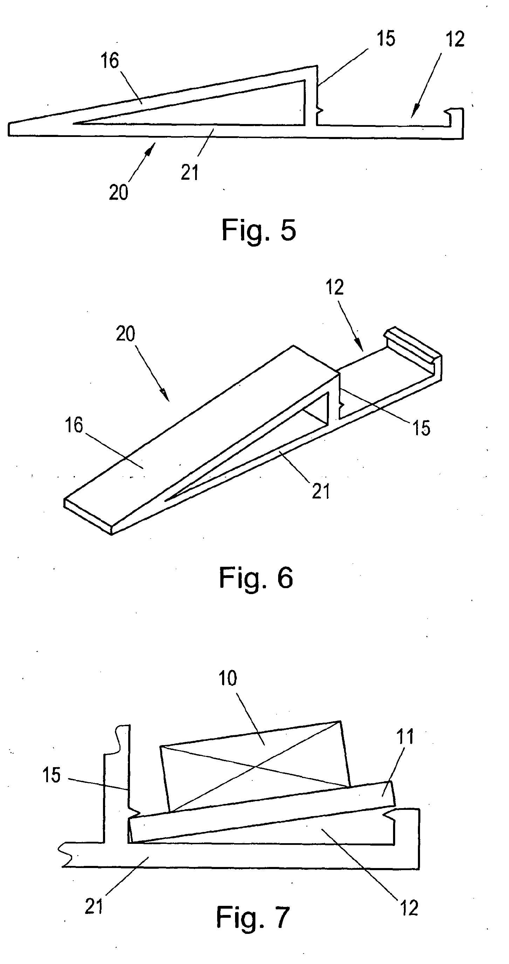

An der Innenseite des Rahmens 2 sind in hinterschnittene Nuten 12 Leuchtmittel 10, z.B. LEDs, über Träger 11 (Platinen) befestigt. Die Träger 11 der Leuchtmittel 10 können, wie dies in Figur 7 angedeutet ist, durch Einklipsen in den hinterschnittenen Nuten 12 der Rahmenteile 3 festgelegt werden.

Neben den Nuten 12 und neben den Leuchtmitteln 10 sind an der Innenseite der Rahmenteile 3 Blenden 15 vorgesehen, die im Wesentlichen senkrecht zur Ebene der Rahmenteile 3, also im' Wesentlichen parallel zur Frontfolie 4, ausgerichtet sind. Von dem freien Ende der Blenden 15 erstrecken sich Reflexionsflächen 16 von den Nuten 12 und damit von den Leuchtmitteln 10 weg. Die Reflexionsflächen 16 sind zur Ebene der Rahmenteile 3 schräg ausgerichtet und schließen mit der Frontfolie 4 einen spitzen Winkel ein.

Die Reflexionsflächen 16 können, wie in Figuren 1 und 2 gezeigt, eben ausgebildet sein.

Es ist aber auch in Betracht gezogen, die Reflexionsflächen 16, so wie in Figur 4 gezeigt, konkav gewölbt auszubilden.

In Figur 3 ist eine Ausführungsform von Rahmenteilen 3 gezeigt, deren Reflexionsflächen 16 verstellbar sind, sodass deren Winkel zu Ebene der Rahmenteile 3 und der Frontfolie 4 und/oder deren Form (eben oder gebogen) durch Verformen herbeigeführt werden kann.

Durch die Blenden 15, insbesondere in Kombination mit den Reflexionsflächen 16, die an der Innenseite des Rahmens 2 der Lichtdecke 1 vorgesehen sind, wird, wie durch schematisch angedeutete Lichtstrahlen in Figur 1 angedeutet ist, verhindert, dass Licht von den Leuchtmitteln 10 ungleichmäßig auf die Frontfolie 4 trifft, so dass die Frontfolie 4 der erfindungsgemäßen Lichtdecke 1 gleichmäßig ausgeleuchtet wird, ohne dass auf die Frontfolie 4 Schatten fallen.

Im Rahmen der Erfindung ist in Betracht gezogen, die Blenden 15 und die Reflexionsflächen 16 an den Rahmenteilen 3 nicht fix montiert vorzusehen, sondern als gesonderte Bauteile 20 auszubilden, wie dies in den Figuren 5 bis 7 in einem Ausführungsbeispiel gezeigt ist.

Die die Bauteile bildenden Profilleisten umfassen eine Grundplatte 21, an der die Blende 15 und die Reflexionsfläche 16 vorgesehen sind. Auch ist an der Grundplatte 21 der Profilleiste 20 die hinterschnittene Nut 12 vorgesehen, in welche die Träger 11 der Leuchtmittel 10 eingerastet werden können (Figur 7).

Im gezeigten Ausführungsbeispiel ist die blickdichte Folie 5 reflektierend ausgebildet, so dass durch die von Reflexionsflächen 16 unterstützte Mehrfachreflexion die gleichmäßige Ausleuchtung der Frontfolie 4, die durchscheinend ausgebildet ist und die gegebenenfalls bedruckt sein kann, verbessert ist.

## Patentansprüche

1. Lichtdecke (1) mit einem Rahmen (2), in dem eine durchscheinende Frontfolie (4) und eine Rückwand (6) vorgesehen sind, wobei zwischen der Frontfolie (4) und der Rückwand (6) Leuchtmittel (10) vorgesehen sind, wobei den Leuchtmitteln (10) Blenden (15) auf der der Frontfolie (4) zugekehrten Seite der Leuchtmittel (10) zugeordnet sind und wobei die Blenden (15) von Rahmenteilen (3) des Rahmens (2) in das Innere des Rahmens (2) abstehend vorgesehen sind, **dadurch gekennzeichnet, dass** zwischen der Frontfolie (4) und der Rückwand (6) eine blickdichte Folie (5) vorgesehen ist, dass die Leuchtmittel (10) zwischen der Frontfolie (4) und der blickdichten Folie (5) angeordnet sind, dass neben den Blenden (15) eine hinterschnittene Nut (12) vorgesehen ist, in der Leuchtmittel (10) über Träger (11) festgelegt sind, dass die Nuten (12) auf ihrer der Frontfolie (4) zugekehrten Seite durch die Blende (15) begrenzt sind und dass eine Reflexionsfläche (16) vorgesehen ist, die sich von der Blende (15) weg zur Frontfolie (4) hin erstreckt und mit der Frontfolie (4) einen spitzen Winkel einschließt.

2. Decke nach Anspruch 1, **dadurch gekennzeichnet, dass** die Reflexionsfläche (16) eben ist.

3. Decke nach Anspruch 1, **dadurch gekennzeichnet, dass** die Reflexionsfläche (16) gekrümmt, insbesondere konkav gekrümmt, ist.

4. Decke nach einem der Ansprüche 1 bis 3, **dadurch gekennzeichnet, dass** die Reflexionsfläche (16) aus plastisch verformbarem Werkstoff besteht und verformbar ist.

5. Decke nach einem der Ansprüche 1 bis 4, **dadurch gekennzeichnet, dass** die Blende (15) und die gegebenenfalls vorgesehene Reflexionsfläche (16) an einem an Rahmenteilen (3) festlegbaren Bauteil (20) in Form einer Profilleiste vorgesehen sind.

6. Decke nach Anspruch 5, **dadurch gekennzeichnet, dass** die Bauteile (20) eine Grundplatte (21) aufweisen und dass an der Grundplatte (21) die Blende (15) und gegebenenfalls die Reflexionsfläche (16) vorgesehen sind.

7. Decke nach Anspruch 5 oder 6, **dadurch gekennzeichnet, dass** die gegebenenfalls hinterschnittene Nut (12) für die Aufnahme des Trägers (11) des Leuchtmittels (10) an dem gesonderten Bauteil (20) vorgesehen ist.

## Claims

1. Illuminated ceiling (1) with a frame (2) in which a translucent front foil (4) and a back wall (6) are provided, wherein lamps (10) are provided between the front foil (4) and the back wall (6), wherein the lamps (10) are associated with blinds (15) on the side of the lamp (10) facing the front foil (4) and wherein the blinds (15) are designed to protrude from frame sections (3) of the frame (2) into the interior of the frame (2), **characterised in that** an opaque foil (5) is provided between the front foil (4) and the back wall (6), that the lamps (10) are disposed between the front foil (4) and the opaque foil (5), that an undercut groove (12) is provided next to the blinds (15), in which the lamps (10) are fixed via supports (11), that the grooves' (12), on their sides facing the front foil (4), are delimited by the blind (15) and **in that** a reflecting surface (16) is provided which extends away from the blind (15) towards the front foil (4) creating an acute angle with the front foil (4).

2. Ceiling according to claim 1, **characterised in that** the reflecting surface (16) is plane.

3. Ceiling according to claim 1, **characterised in that** the reflecting surface (16) is curved, in particular concavely curved.

4. Ceiling according to one of claims 1 to 3, **characterised in that** the reflecting surface (16) is made of a plastically deformable material and is deformable.

5. Ceiling according to one of claims 1 to 4, **characterised in that** the blind (15) and the reflecting surface (16) provided where necessary are provided in the form of a moulding on a component (20) which can be fixed to a frame section (3).

6. Ceiling according claim 5, **characterised in that** the components (20) have a base plate (21) and **in that** the blind (15) and where necessary the reflecting surface (16) are arranged on the base plate (21).

7. Ceiling according claim 5 or 6, **characterised in that** the groove (12), which is undercut where necessary, is provided on the separate component (20) for receiving the support (11) of the lamp (10).

## Revendications

1. Plafond lumineux (1) avec un cadre (2), dans lequel un film frontal translucide (4) et une paroi arrière (6) sont prévus, dans lequel des moyens d'éclairage (10) sont prévus entre le film frontal (4) et la paroi arrière (6), dans lequel on associe des obturateurs (15) aux moyens d'éclairage (10) sur le côté tourné vers la feuille frontale (4) des moyens d'éclairage (10), et dans lequel les obturateurs (15) sont prévus de manière à dépasser de parties de cadre (3) du cadre (2) jusqu'à l'intérieur du cadre (2), **caractérisé en ce que** l'on prévoit un film opaque (5) entre le film frontal (4) et la paroi arrière (6), **en ce que** les moyens d'éclairage (10) sont disposés entre le film frontal (4) et le film opaque (5), **en ce qu'**une rainure en contre-dépouille (12) est prévue à côté des obturateurs (15), dans laquelle des moyens d'éclairage (10) sont fixés via des supports (11), **en ce que** les rainures (12) sont délimitées par l'obturateur (15) sur leur côté tourné vers le film frontal (4), et **en ce que** l'on prévoit une surface de réflexion (16) qui s'étend en éloignement de l'obturateur (15) jusqu'au film frontal (4) et forme un angle aigu avec le film frontal (4).

2. Plafond selon la revendication 1, **caractérisé en ce que** la surface de réflexion (16) est plane.

3. Plafond selon la revendication 1, **caractérisé en ce que** la surface de réflexion (16) est recourbée, en particulier recourbée de manière concave.

4. Plafond selon l'une des revendications 1 à 3, **caractérisé en ce que** la surface de réflexion (16) se compose d'un matériau plastiquement déformable et est déformable.

5. Plafond selon l'une des revendications 1 à 4, **caractérisé en ce que** l'obturateur (15), et la surface de réflexion (16) prévue le cas échéant, sont prévus sur un élément (20) sous la forme d'une baguette profilée pouvant être fixée sur des parties de cadre (3).

6. Plafond selon la revendication 5, **caractérisé en ce que** les éléments (20) présentent une plaque de base (21) et **en ce que** l'on prévoit les obturateurs (15), et la surface de réflexion (16) le cas échéant, sur la plaque de base (21).

7. Plafond selon la revendication 5 ou 6, **caractérisé en ce que** la rainure en contre-dépouille (12) le cas échéant est prévue pour la réception du support (11) du moyen d'éclairage (10) sur l'élément (20) séparé.
